# EUROPÄISCHE PATENTSCHRIFT

(11) **EP 1 254 323 B1**
(45) Veröffentlichungstag und Bekanntmachung des Hinweises auf die Patenterteilung: **27.04.2005**
(21) Anmeldenummer: 01915211.5
(22) Anmeldetag: 09.02.2001
(51) Int. Cl.: F16D 59/02, F16D 55/36

(54) **ELEKTROMAGNETISCHE BREMSE INTEGRIERT IN TREIBSCHEIBE**
ELECTROMAGNETIC BRAKE INTEGRATED IN TRACTION SHEAVE
FREIN ELECTROMAGNETIQUE INTEGRE DANS UNE POULIE MOTRICE

(30) Priorität: 11.02.2000 DE 10006255
(43) Veröffentlichungstag der Anmeldung: 06.11.2002
(73) Patentinhaber: Chr. Mayr GmbH & Co. KG, D-87665 Mauerstetten (DE)
(72) Erfinder: WEISS, Harald, 87677 Stöttwang (DE)
(74) Vertreter: Ruschke, Hans Edvard, Dipl.-Ing.
(86) Internationale Anmeldenummer: PCT/EP2001/001410
(87) Internationale Veröffentlichungsnummer: WO 2001/059317

(56) Entgegenhaltungen:
- DE-A- 19 500 589
- DE-A- 19 733 169
- GB-A- 2 345 586
- US-A- 4 566 574

## Beschreibung

Im GbM 296 11 732.3 der Anmelderin vom 05.07.1996 wird eine elektro-magnetisch gelüftete Reibungs-Sicherheitsbremse mit zwei Bremsscheiben und einem axial verschieblichen unverdrehbaren Elektromagneten gezeigt. Dabei sind die zwei Bremsscheiben auf einer umlaufenden zentralen Nabe beiderseits des Elektromagneten axial verschieblich angeordnet und werden beim Bremsen durch Druckfedern im Spulenträger zwischen der Anker-scheibe und einer Flanschplatte einerseits und dem Spulenträgergehäuse und einer Maschinenwand andererseits eingeklemmt. Hierbei liegen die rotierenden Teile im Inneren der Bremse, was nicht in jeder denkbaren Einbausituation von Nutzen sein muß.

In der Fig. 5 der WO 98/01681 der Anmelderin vom 27. Juni 1997 bzw. 15. Januar 1998 ist ein als Nabe zu bezeichnendes drehbares Teil einer gleichartigen Bremse so ausgestaltet, daß es alle anderen Komponenten der Bremse umhüllt bzw. radial nach außen hin umschließt, also die rotierenden Bremsscheiben, den Spulenträger mit den Druckfedern und die davon beaufschlagte Ankerscheibe. An dieser Konstruktion ist unter anderem nachteilig, daß die Verbindung zwischen der rotierenden Nabe und den Bremsscheiben über eine aufwendige und zudem platzraubende Innen- bzw. Außenverzahnung von Nabe und Bremsscheiben erfolgt.

Bei diesem Stand der Technik handelt es sich um eine Zweikreisbremse mit je einem Reibelement, jeweils links und rechts des zentral angeordneten Spulenträgers mit der Ankerscheibe. Außerdem ist der Spulenträger mit Ankerscheibe schwimmend gelagert.

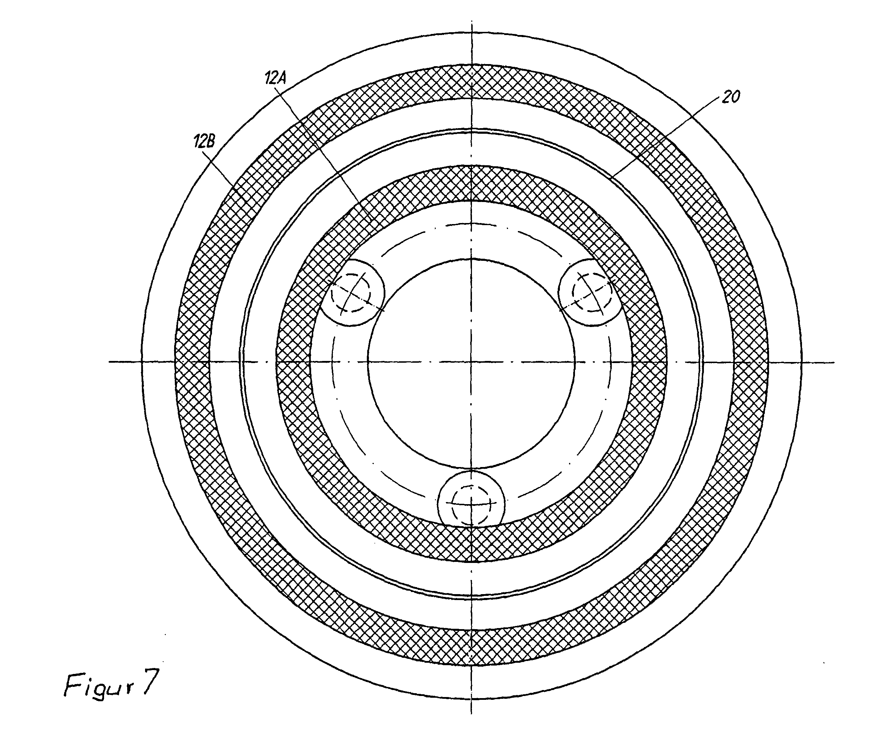

Auch die DE-OS 197 33 169 zeigt nur die Merkmale des Oberbegriffs des Anspruchs 1. Teil 3 ist eine feststehende Maschinenwand (Spalte 10, Zeile 24) und Teil 67 eine bogenförmige Federlamelle (Spalte 10, Zeilen 59 ff). Sie scheinen nur infolge ihrer Darstellung in der Figur 7 eine Beziehung zum Reibbelagträger (7) nach der vorliegenden Erfindung zu haben, was sich aber bei genauerem Hinsehen als Fehlinterpretation herausstellt.

Die DE-OS 41 05 358 zeigt eine Kraftfahrzeugbremse mit einem topfförmigen Teil 14 eines Bremsgehäuses 13, Bremsscheiben 16 und eine elektromagnetische Zuspanneinrichtung 18, also Merkmale, die bereits als bekannt vorausgesetzt werden.

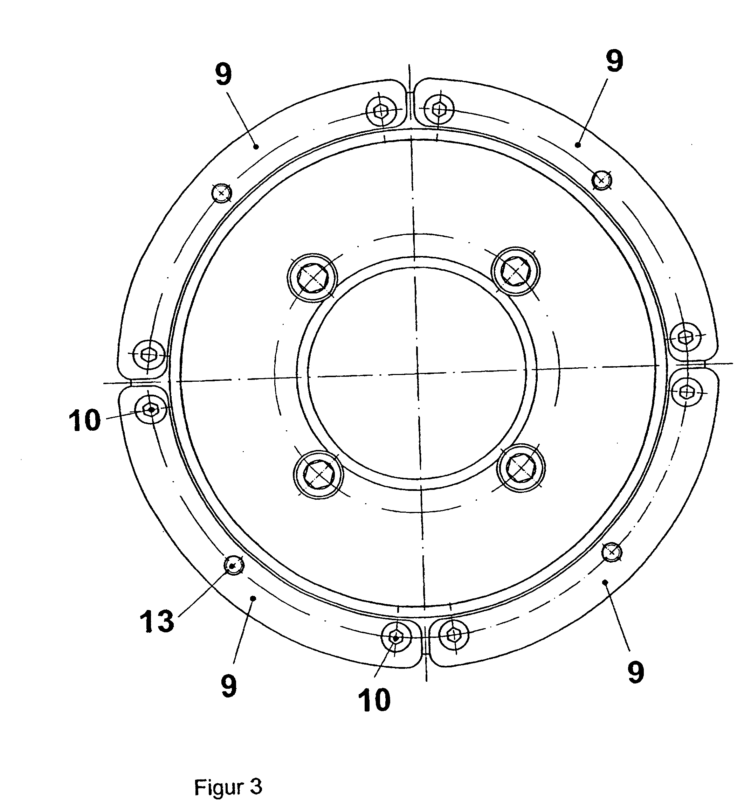

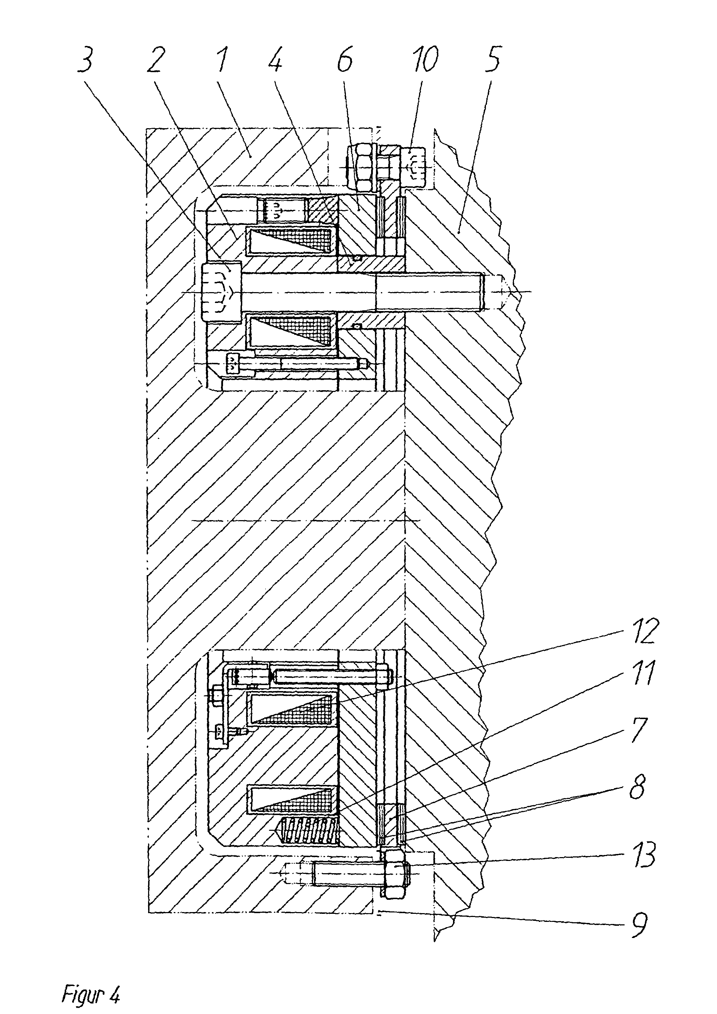

Die DE-PS 35 39 805 beschreibt eine elektromagnetisch betätigte Federdruckbremse mit den üblichen Merkmalen. In den Fig. 3 und 4 ist eine Blattfeder 10 gezeigt, aber eine Ähnlichkeit mit der Feder der erfindungsgemäßen Bremse ist nicht gegeben.

Aus der DE-PS 295 826 geht eine elektromagnetisch gelüftete und durch Federzug ansprechende Bremse als bekannt hervor.. Die DE-OS 36 20 797 stellt eine Elektromagnetbremse mit radial wirkenden Bremsbacken dar und ist mit der vorliegenden Erfindung nicht vergleichbar.

In der DE-OS 14 00 084 wird eine Elektromagnet-Lamellenkupplung gezeigt. Bei der Ringbremse für Kraftfahrzeuge nach der DE-OS 41 41 525 ist Teil 3 ein innen umgreifender Bremssattel. Die Kfz-Bremse nach der US-PS 24 65 394 ist für diesen speziellen Zweck ausgebildet.

Im Stand der Technik ist es im übrigen bekannt, Bremsen der hier vorausgesetzten Art u. a. dadurch als Zweikreisbremsen auszubilden, daß die Ankerscheibe und deren elektromagnetische Beaufschlagung radial bzw. diagonal geteilt wird.

Es ist die Aufgabe der vorliegenden Erfindung, eine vereinfacht und besonders kompakt aufgebaute Bremse der eingangs diskutierten Art mit außenliegender Treibscheibe und darin integrierten Bauteilen anzugeben. Dabei soll alternativ eine Einkreis- oder eine Zweikreisbremse realisierbar sein, wobei zusätzlich das Drehmoment ohne großen Aufwand erhöhbar sein soll.

Bei einer "Zweikreisbremse" (im Gegensatz zu einer "Einkreisbremse") gibt es zwei weitgehend voneinander unabhängige Bremsenteile, die separat voneinander arbeiten: Selbst wenn der eine Teil aus irgendeinem Grund versagen sollte, würde noch immer der andere Teil bremsen, d.h. die Sicherheit der Bremse wird stark erhöht.

Die vorliegende Erfindung wird unter Bezugnahme auf die beigefügten Zeichnungen näher beschrieben. In diesen ist, jeweils in stark vereinfachter Darstellung,
- Fig. 1: ein Vertikalschnitt durch die wesentlichen Teile der erfindungsgemäßen elektromagnetischen Bremse, die in eine rotierende Treibscheibe 1 integriert ist;
- Fig. 2: die untere Hälfte (unterhalb der Mittellinie der Fig. 1) eines ähnlichen Schnittes in einer etwas anderen Ausgestaltung der bremsenden Teile dieser Anordnung;
- Fig. 3: eine Draufsicht auf die Fig. 1 von links bei abgenommener Treibscheibe 1 zur besseren Darstellung der beispielsweise vier Lamellen 9, die die Treibscheibe 1 mit dem Reibbelagträger 7 verbinden;
- Fig. 4: ein Schnitt ähnlich der Fig. 1, jedoch mit diagonal geteilter Magnetspule bzw. Ankerscheibe zur Ausbildung einer sogenannten Zweikreisbremse;
- Fig. 5: eine Schnittansicht in prinzipieller Darstellung senkrecht zur Rotationsache der Bremse zur Verdeutlichung der Ausführungsform nach Fig. 4;
- Fig. 6-7: eine ähnliche Darstellung einer erfindungsgemäßen Bremse als Zweikreisbremse ähnlich den Fig. 4-5, jedoch mit konzentrisch geteilter Magnetspule und Ankerscheibe, ansonsten aber gleichen Funktionsprinzipien;
- Fig. 8a/b: zwei Details aus Fig. 6 (siehe den Kreis rechts oben) in einer Ansicht axial von vorne (Fig. 8a) und radial von außen (Fig. 8b);
- Fig. 9-10: eine den Fig. 4/5 bzw. 6/7 ähnliche Darstellung einer etwas anderen Ausführungsform einer erfindungsgemäßen Bremse als Zweikreisbremse mit konzentrischer Teilung von Magnetspule und Ankerscheibe, wobei der Reibbelagträger 7 von radial innen her in den Spalt zwischen Ankerscheibe und Motor/Getriebe 5 eingreift.

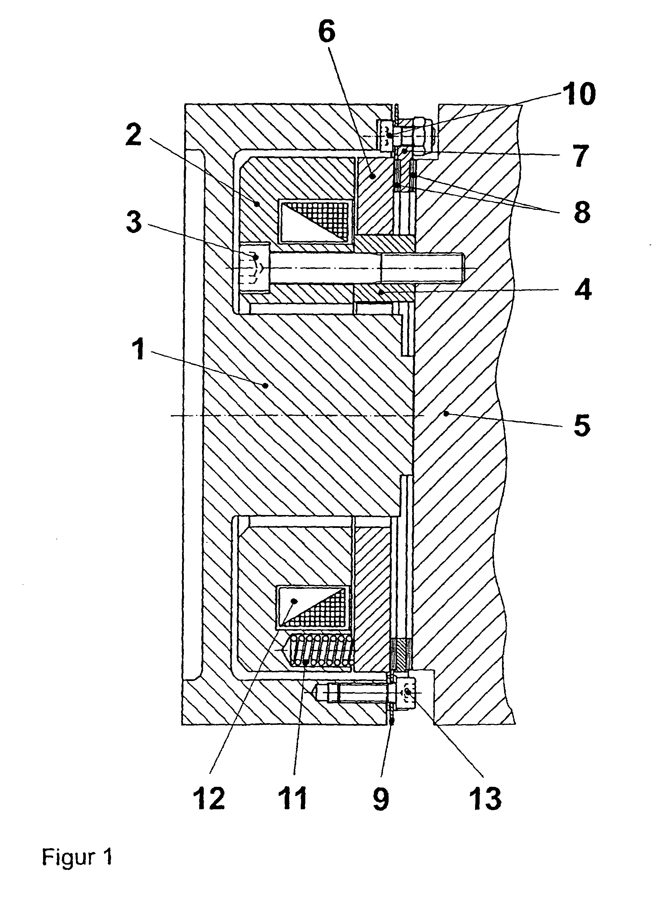

Zunächst werden die Ausführungsformen nach den Figuren 1-3 beschrieben:

Eine im wesentlichen topfförmig mit zentraler Nabe ausgebildete Treibscheibe 1 ist, in nicht näher dargestellter Weise, drehbar an einem ebenfalls nicht näher dargestellten Motor oder Getriebe oder dergleichen (Bezugszeichen 5) gelagert.

Die topfförmige Treibscheibe kann über darüber geführte Seile z.B. einen Aufzug betätigen oder über Riemen oder dergleichen zu anderen Antriebszwecken dienen. Besonderes Charakteristikum dieser elektromagnetischen Bremse ist die Unterbringung des ringförmigen Spulenträgers 2 mit der darin eingelagerten Magnetspule 12 in dem ringförmigen Innenraum der Treibscheibe 1, und zwar zusammen mit der unter dem Einfluß der Federn 11 bzw. der Magnetspule 12 axial verschieblichen Ankerscheibe 6. Dabei greift der ringförmige Reibbelagträger 7 mit den auf seinen beiden Stirnseiten angeordneten Reibbelägen 8 radial von außen in den Spalt zwischen dem stillstehenden Motor/Getriebe (Bezugszeichen 5) und der Ankerscheibe 6, die ebenfalls noch innerhalb der rotierenden Treibscheibe 1 angeordnet ist. Der Reibbelagträger erstreckt sich nach radial einwärts von dem radial äußeren Rand derjenigen Stirnfläche der (in ihrem Außenbereich topfförmigen) Treibscheibe, die dem Motor/Getriebe 5 zugewandt ist. Auf diese Weise wird eine besonders kompakte und platzsparende Bauweise erreicht und zugleich werden die die eigentliche Bremsung bewirkenden Teile besonders gut gegenüber der Umgebung abgeschirmt.

Der ringförmige Spulenträger 2 mit der darin eingebetteten Magnetspule 12 wird über mehrere, auf dem Umfang verteilte Zylinderkopf-Schrauben 3 am Motor (oder Getriebe oder Anbaukonsole) 5 befestigt. Die Ankerscheibe 6 ist drehfest, jedoch axial beweglich mit dem Spulenträger 2 verbunden, d.h. sie wird von den Zwischenhülsen 4 der Schrauben 3 in axialer Richtung geführt. Beispielsweise vier Lamellen 9 in Form von Kreisringsegmenten (siehe Fig. 3) sind über je eine mittig darin angeordnete Schraube 13 mit der vorgenannten Stirnfläche der Treibscheibe 1 verbunden, wie dies in Fig. 3 und in Fig. 1 unten am innenliegenden stirnseitigen Rand der Treibscheibe ersichtlich ist. Jede dieser Lamellen 9 ist außerdem mit zwei Schrauben 10, jeweils am Ende der Lamelle, mit dem Reibbelagträger 7 verbunden, und zwar wie dies in Fig. 3 und in Fig. 1 am oberen stirnseitigen Rand der Treibscheibe gezeichnet ist. An diesem Reibbelagträger 7 sind zwei Reibbeläge 8 angebracht. Der Reibbelagträger 7 ist also mit vier Lamellen 9 am seitlichen Rand an der axial inneren Stirnfläche der Treibscheibe befestigt, und zwar in der Nähe des Umfanges bzw. am stirnseitigen Rand des Umfangsflansches der Treibscheibe.

Sollten eine oder mehrere Lamellen 9 brechen, ist dennoch eine Drehomentübertragung von der Treibscheibe 1 zu dem Reibbelagträger durch die Schrauben 10 gewährleistet, die mit ihrem jeweiligen Kopf in eine entsprechend gestaltete aber leicht vergrößerte Ausnehmung in der Stirnfläche der Treibscheibe 1 eingepasst sind. Entsprechend kann auch der Kopf der Schraube 13 in eine passende Ausnehmung im Reibbelagträger 7 eingreifen: Mit anderen Worten, selbst wenn alle Lamellen 9 gebrochen wären, würde dennoch eine Bremsung möglich durch den Eingriff der Schraubenköpfe in die genannten Ausnehmungen.

Wird Spannung auf die Elektromagnetspule 12 gegeben, wird die Ankerscheibe 6 in Fig. 1 entgegen der Kraft der Druckfeder 11nach links angezogen und der mit den zwei Reibbelägen 8 versehene Reibbelagträger 7, welcher im normalen Betriebszustand über die Lamellen 9 federnd an die Treibscheibe 1 gekoppelt ist, kann frei umlaufen. Wird der Strom an der Magnetspule 12 weggenommen, wird über den Druck der auf dem Umfang verteilten Federn 11 die Ankerscheibe 6 in Richtung auf den Motor (oder Getriebe oder Anbaukonsole) 5 gedrückt, mit der Folge, daß die beiden Reibbeläge 8 in Reibeingriff mit der jeweils gegenüberliegenden Stirnfläche kommen und die Bremsung somit eingeleitet wird.

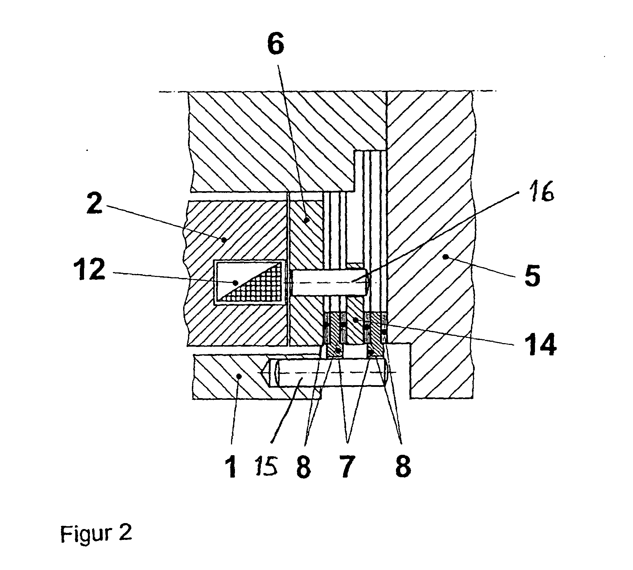

In Fig. 2 ist eine Alternative zur Bauform der Fig. 1 näher dargestellt. Hierbei handelt es sich um eine Ausführungsform mit zwei parallel zueinander angeordneten kreisringförmigen Reibbelagträgern 7 mit jeweils zwei Reibbelägen, also einem Reibbelag auf jeder Seite. Die Reibbelagträger 7 sind über mehrere auf dem Umfang verteilte Stifte 15 (ähnlich den Befestigungsschrauben 13 aus der Fig. 1) mit dem einen stirnseitigen Ende des radial äußersten Teils der Treibscheibe 1 verbunden, mit der diese Reibbelagträger 7 umlaufen. In ähnlicher Weise ist die Zwischenscheibe 14 über mehrere auf dem Umfang verteilte Stifte 16 drehfest aber axial verschieblich mit der Ankerscheibe 6 verbunden, die ihrerseits zwar axial beweglich aber in Umfangsrichtung unbeweglich ist. Durch die Ausgestaltung der alternativen Ausführungsform der Fig. 2 wird die zur Verfügung stehende Reibfläche und damit das von der Bremse erreichbare Reibmoment deutlich erhöht.

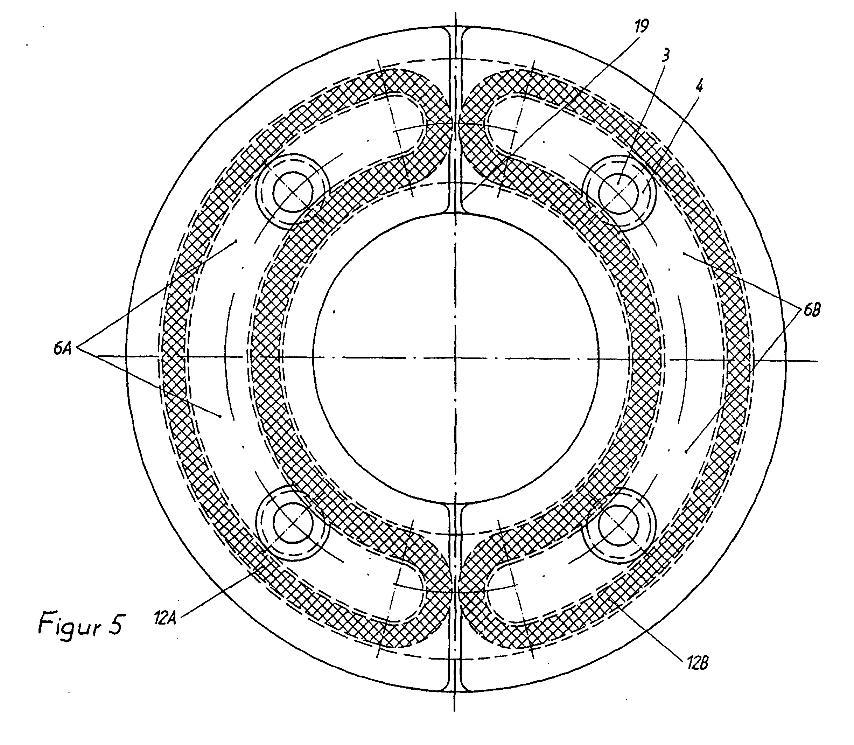

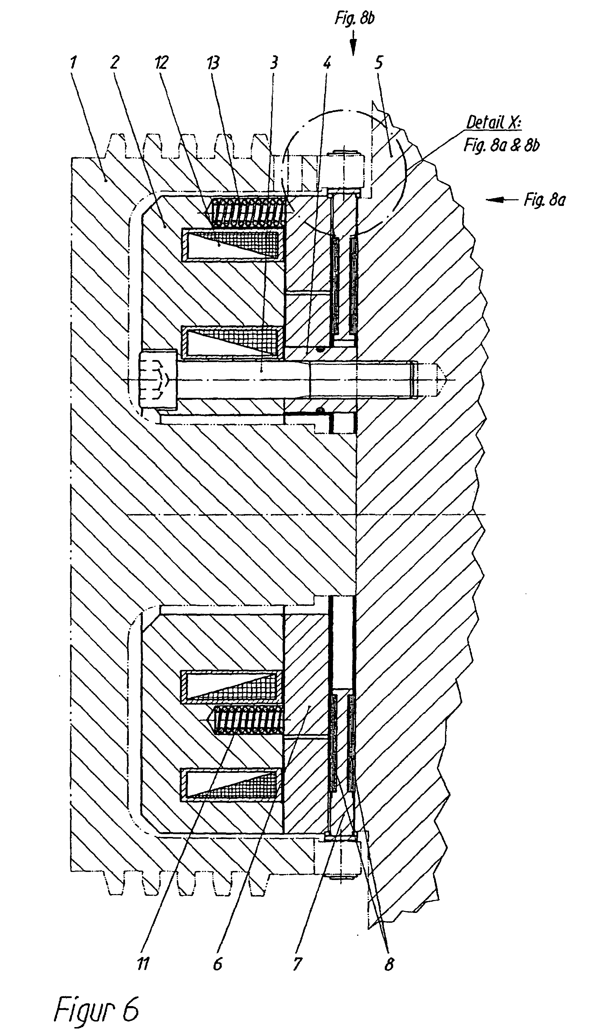

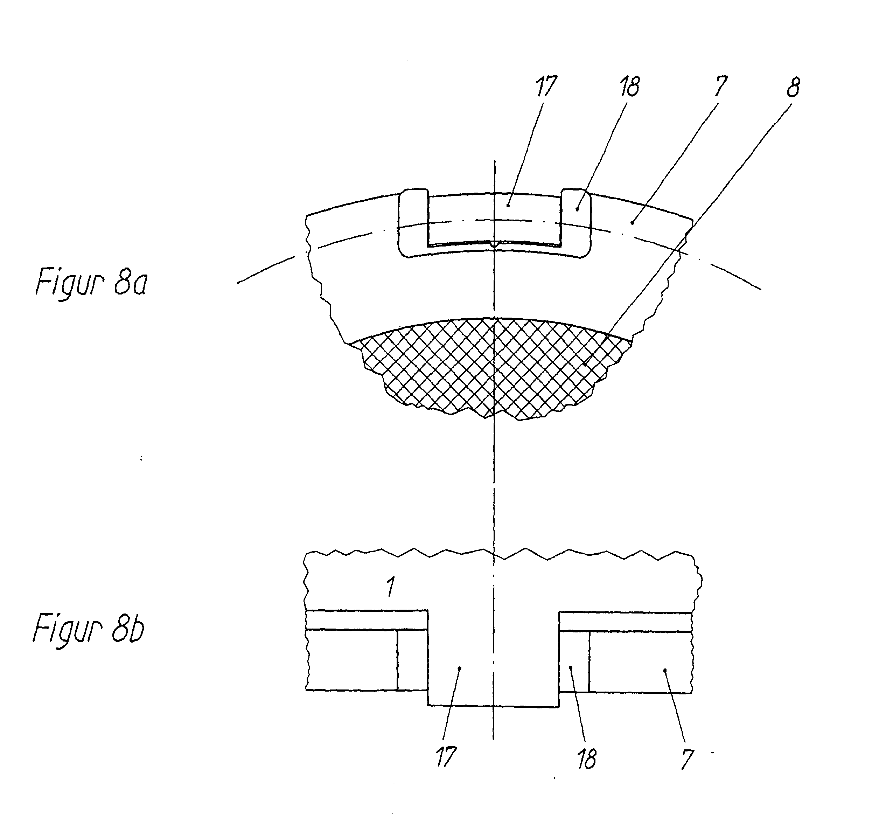

Eine Ausgestaltung der voranstehend erläuterten Bremse als sogenannte Zweikreisbremse mit zwei unabhängig voneinander betätigbaren bzw. prüfbaren Bremsenteilen erfolgt in besonders einfacher Weise beispielsweise dadurch, daß die Ankerscheibe und/oder der zugeordnete Elektromagnet in radialer oder vorzugsweise diagonaler Richtung geteilt werden: Eine solche Ausführungsform der erfindungsgemäßen Bremse ist in den Fig. 4 und 5 gezeigt: Sowohl die Magnetspule 12 als auch die ringförmige Ankerscheibe 6 sind in zwei gleiche, voneinander unabhängige Teile diagonal geteilt, wie dies besonders gut aus der Fig. 5 deutlich wird. Eine weitere solche Ausführungsform einer Zweikreisbremse ist in den Fig. 6-8 näher dargestellt, bei der die Ankerscheibe 6 und die Magnetspule 12 in zwei voneinander unabhängige Teile konzentrisch geteilt sind. Ein Detail der Figur 6 (siehe den Kreis oben rechts), nämlich die besondere Art der Verbindung zwischen der Stirnfläche der Treibscheibe 1un dem Reibbelagträger 7 ist in Fig. 8 in einer Ansicht von axial vom (obere Darstellung) und einer Ansicht von radial außen (untere Darstellung) gezeigt.

Die Ausführungsformen der Fig. 4 und 5 bzw. 6-8 sind in Bezug auf die vorliegende Erfindung grundsätzlich gleich ausgestaltet, d.h. mit einem mit dem stirnseitigen Rand der Treibscheibe verbundenen, von außen radial in den Spalt zwischen Ankerscheibe 6 und Maschinenelement 5 eingreifenden Reibbelagträger 7. Die der ersten Ausführungsform entsprechenden Bauteile der weiteren Bauformen der Figuren 4-8 haben die gleichen Bezugszeichen und werden hier nicht erneut beschrieben. Allerdings sind im Fall der Zweikreisbremse der Figuren 4/5 bzw. 6-8 jeweils Ankerscheibe und Magnetspule doppelt bzw. unabhängig voneinander ausgeführt, nämlich einerseits diagonal geteilt und andererseits konzentrisch. Darüber hinaus muß dann auch die Federdruckbeaufschlagung (d.h. Druckfedern 11) für jeden Ankerscheibenteil doppelt ausgeführt sein; dies wird in den Zeichnungen nur angedeutet - natürlich sind mehrere solcher Druckfedern auf dem Umfang der Bremse gleichförmig verteilt angeordnet.

Die Figuren 8a und 8b zeigen das Detail X der Figur 6 (der strichpunktierte Kreis rechts oben), d. h. eine gegenüber den anderen Ausführungsformen alternative Art der Verbindung der rotierenden Treibscheibe 1 mit dem Reibbelagträger 7 der Figur 6: Auf dem Umfang der Treibscheibe 1 verteilt sind beispielsweise acht axial vorstehende Klauen 17 vorgesehen, von denen eine Klaue 17 in den Figuren 8a und 8b gezeigt ist, und zwar jeweils mit der Blickrichtung, wie sie in Figur 6 durch die zwei Pfeile angedeutet ist. Indem die axial vorstehende Klaue 17 in eine entsprechend geformte bzw. gefräste Umfangsausnehmung in der Treibscheibe 1 eingreift, wird die Antriebsverbindung zwischen der Treibscheibe 1 und dem Reibbelagträger hergestellt. Zur verbesserten Dämpfung dieser Antriebsverbindung ist ein passendes U-förmiges Kunststoffteil 18 in die ausgefräste Umfangsausnehmung in der Treibscheibe 1 eingepresst.

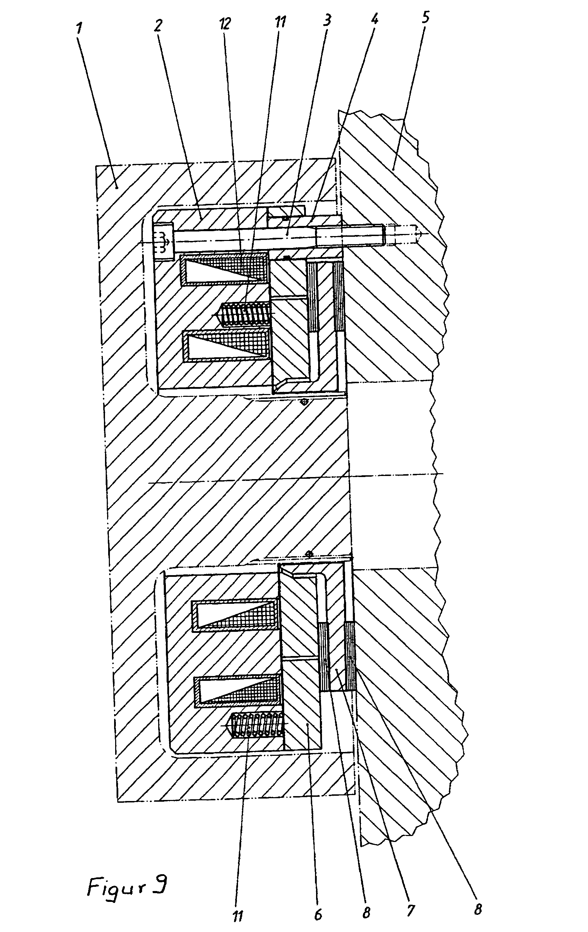

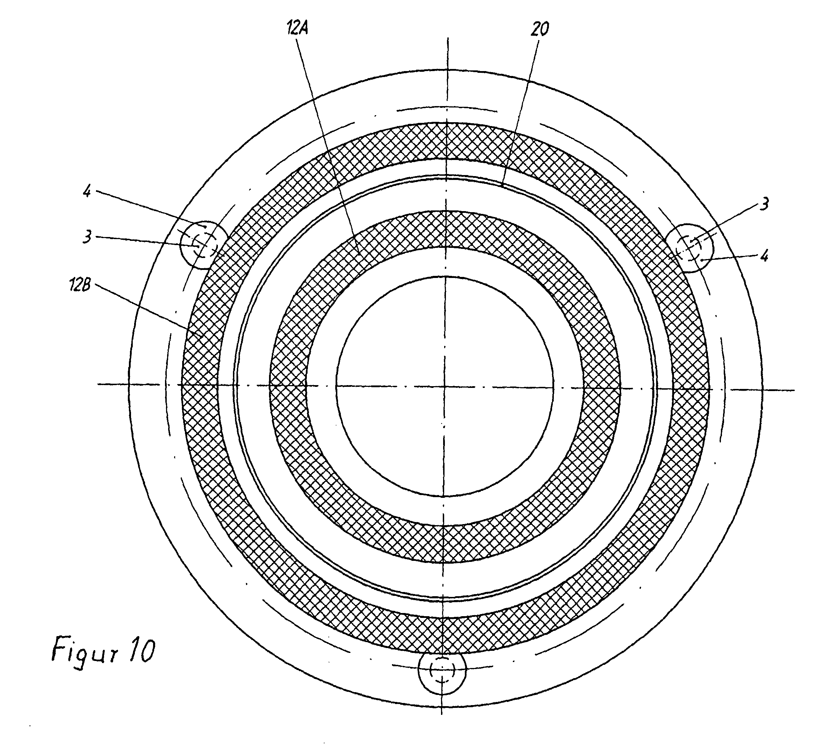

Die Ausführungsform der Figur 9 bzw. 10 unterscheidet sich von den anderen Ausführungsformen lediglich darin, daß die Antriebsverbindung zwischen der rotierenden (gegebenenfalls abzubremsenden) Treibscheibe 1 und dem Reibbelagrotor 7 mit den Reibbelägen 8 von radial außen nach radial innen in den Bereich der innenliegenden Nabe der Treibscheibe 1 verlegt wurde, wo eine Umfangsverzahnung zwischen beiden Teilen dafür sorgt, daß der Reibbelagrotor 7 (= Bremsscheibe) relativ zur Treibscheibe 1 axial verschieblich aber unverdrehbar angeordnet ist.

### Bezugszeichenliste:

- 1: Treibscheibe (rotierend, topfförmig)
- 2: Spulenträger
- 3: Befestigungsschraube Bremse
- 4: Zwischenhülse
- 5: Motor, bzw. Getriebe, bzw. Anbaukonsole
- 6: Ankerscheibe, ggfs. Teil 6A und Teil 6B
- 7: Reibbelagträger
- 8: Reibbeläge
- 9: Lamelle
- 10: Befestigungsschraube Lamelle am Reibbelagträger
- 11: Schraubenfedern
- 12: Magnetspule, ggfs. Teil 12A und Teil 12B
- 13: Befestigungsschrauben Lamelle an Treibscheibe
- 14: Zwischenscheibe
- 15: Mitnehmerstift/Reibscheiben
- 16: Mitnehmerstift/Zwischenscheibe
- 17: axial vorstehende Klaue von 1
- 18: U-förmige Aufnahme für 17 in 7
- 19: Teilungsebene, diagonal
- 20: Teilungsebene, radial / konzentrisch

## Patentansprüche

1. Elektromagnetisch gelüftete Reibungs-Sicherheitsbremse, die an einem Maschinenelement, wie einem Motor, einem Getriebe oder einer Anbaukonsole (5) befestigt wird,
- mit wenigstens einem drehfest angeordneten Spulenträger (2) und einer oder mehreren darin angeordneten Magnetspulen (12),
- mit einer drehfest angeordneten und relativ zum Spulenträger und zum Maschinenelement axial verschieblichen federdruckbeaufschlagten, ein- oder mehrteiligen Ankerscheibe (6),
- mit wenigstens einem umlaufenden, kreisringförmigen Reibbelagträger (7) axial zwischen der Ankerscheibe (6) und dem Maschinenelement (5), sowie
mit einer alle diese Bremsenteile umfangsmäßig umhüllenden, drehbaren Nabenanordnung in Gestalt einer topfartigen Treibscheibe (1),
**dadurch gekennzeichnet, daß**
der mindestens eine umlaufende, kreisringförmige Reibbelagträger (7) mit dem dem Maschinenelement (5) zugewandten stirnseitigen Rand der Treibscheibe (1) verbunden ist und von radial außen her in den radialen Spalt zwischen dem Maschinenelement (5) und der Ankerscheibe (6) hineinragt,
wobei die Unterbringung des ringförmigen Spulenträgers (2) mit der darin eingelagerten Magnetspule (12) in dem ringförmigen Innenraum der topfartigen Treibscheibe (1) erfolgt, und zwar zusammen mit der unter dem Einfluß der Federn (11) bzw. der Magnetspule (12) axial verschieblichen Ankerscheibe (6).

2. Bremse nach Anspruch 1, **dadurch gekennzeichnet, daß** der kreisringförmige Reibbelagträger (7) mit Hilfe von federnden Lamellen (9) in Gestalt von Kreisring-Segmenten an der Treibscheibe (1) axial verschieblich befestigt ist.

3. Bremse nach Anspruch 2, **dadurch gekennzeichnet, daß** die Lamellen (9) in Gestalt von Kreisring-Segmenten in ihrem Zentrum mit der Treibscheibe (1) und an den Enden mit dem Reibbelagträger (7) - oder umgekehrt - verbunden sind.

4. Bremse nach einem der voranstehenden Ansprüche, **dadurch gekennzeichnet, daß** mindestens ein weiterer Reibbelagträger parallel dazu und koaxial mit dem ersten Reibbelagträger angeordnet und drehfest mit der Treibscheibe (1) verbunden ist, und daß eine Zwischenscheibe (14) zwischen jeweils zwei Reibbelagträgern (7) bzw. deren Reibbelägen (8) angeordnet und drehfest aber axial verschieblich mit der Ankerscheibe (6) verbunden (Mitnehmerstifte 16) ist.

5. Bremse nach einem der Ansprüche 1 bis 3, **dadurch gekennzeichnet, daß** die die jeweilige Lamelle (9) am Reibbelagträger (7) befe-stigende Schraube (10) mit ihrem Kopf axial in eine passende Ausnehmung in der zugewandten Stirnfläche der Treibscheibe (1) hineinragt.

6. Bremse nach einem der voranstehenden Ansprüche, **dadurch gekennzeichnet, daß** die die jeweilige Lamelle (9) an der Treibscheibe (1) befestigende Schraube (13) mit ihrem Kopf axial in eine passende Ausnehmung im äußeren Umfang des axial benachbarten Reibbelagträgers (7) hineinragt.

7. Bremse nach einem der voranstehenden Ansprüche, **dadurch gekennzeichnet, daß** die Ankerscheibe (6) und/oder die Magnetspule (12) in radialer oder diagonaler Richtung geteilt sind (Fig. 4 und 5).

8. Elektromagnetisch gelüftete Reibungs-Sicherheitsbremse, die an einem Maschinenelement, wie einem Motor, einem Getriebe oder einer Anbaukonsole (5) befestigt wird,
- mit wenigstens einem drehfest angeordneten Spulenträger (2) und einer oder mehreren darin angeordneten Magnetspulen (12),
- mit einer drehfest angeordneten und relativ zum Spulenträger und zum Maschinenelement axial verschieblichen federdruckbeaufschlagten, ein- oder mehrteiligen Ankerscheibe (6),
- mit wenigstens einem umlaufenden, kreisringförmigen Reibbelagträger (7) axial zwischen der Ankerscheibe (6) und dem Maschinenelement (5), sowie
- mit einer alle diese Bremsenteile umfangsmäßig umhüllenden, drehbaren Nabenanordnung in Gestalt.einer topfartigen Treibscheibe (1),
**dadurch gekennzeichnet, daß**
der mindestens eine umlaufende, kreisringförmige Reibbelagträger (7) radial innen mit der Nabe der Treibscheibe (1) axial verschieblich oder drehfest verbunden ist und von radial innen her in den radialen Spalt zwischen dem Maschinenelement (5) und der Ankerscheibe (6) hineinragt,
wobei die Unterbringung des ringförmigen Spulenträgers (2) mit der darin eingelagerten Magnetspule (12) in dem ringförmigen Innenraum der topfartigen Treibschiebe (1) erfolgt, und zwar zusammen mit der unter dem Einfluß der Federn (11) bzw. der Magnetspule (12) axial verschieblichen Ankerscheibe (6).

## Claims

1. An electromagnetically released friction safety brake secured to a machine element such as a motor, gearing or a mounting bracket (5), including
- at least one solenoid mount (2) arranged non-rotatable and one or more solenoids (12) arranged therein,
- a single or multi-part spring-loaded armature disk (6) non-rotatable arranged and axially shiftable relative to said solenoid mount and said machine element,
- at least one rotating circular ring-shaped friction lining mount (7) arranged axially between said armature disk (6) and said machine element (5), as well as
- a rotatable hub arrangement in the form of a pot-shaped traction sheave (1) circumferentially enclosing all of said brake parts,
**characterized in that**
said at least one rotating circular ring-shaped friction lining mount (7) is connected to the face edge of said traction sheave (1) facing said machine element and protrudes radially from without into the radial gap between said machine element (5) and said armature disk (6),
wherein the annular solenoid mount (2) including the solenoid (12) is accomodated in the annular interior space of the traction sheave (1), i. e. together with the axially shiftable armature disk (6) as influenced by the springs (11) or the solenoid (12).

2. The brake as set forth in claim 1, **characterized in that** said circular ring-shaped friction lining mount (7) is secured axially shiftable to said traction sheave (1) with the aid of spring lamellae (9) in the form of circular ring segments.

3. The brake as set forth in claim 2, **characterized in that** said lamellae (9) in the form of circular ring segments are connected at their center to said traction sheave (1) and at the ends to said friction lining mount (7) or vice-versa.

4. The brake as set forth in any of the preceding claims, **characterized in that** at least one further friction lining mount is arranged parallel thereto and coaxially to said first friction lining mount and connected non-rotatably to said traction sheave (1) and that an intermediate disk (14) is arranged between two friction lining mounts (7) each or the friction linings (8) thereof and is non-rotatable but axially shiftable connected to said armature disk (6) (slave pins 16).

5. The brake as set forth in any of the claims 1 to 3, **characterized in that** said bolt (10) securing each lamella (9) to said friction lining mount (7) protrudes by its head axially into a corresponding recess in the facing face of said traction sheave (1).

6. The brake as set forth in any of the preceding claims, **characterized in that** said bolt (13) securing each lamella (9) to said traction sheave (1) protrudes by its head axially into a correspondingly recess in the outer circumference of said axially adjoining friction lining mount (7).

7. The brake as set forth in any of the preceding claims, **characterized in that** said armature disk (6) and/or said solenoid (12) are split radially or diagonally (Figs. 4 and 5).

8. An electromagnetically released friction safety brake secured to a machine element such as a motor, gearing or a mounting bracket (5), including
- at least one solenoid mount (2) arranged non-rotatable and one or more solenoids (12) arranged therein,
- a single or multi-part spring-loaded armature disk (6) non-rotatably arranged and axially shiftable relative to said solenoid mount and the machine element,
- at least one rotating circular ring-shaped friction lining mount (7) arranged axially between said armature disk (6) and said machine element (5), as well as a rotatable hub arrangement in the form of a pot-shaped traction sheave (1) circumferentially enclosing all of said brake parts,
**characterized in that**
said at least one rotating circular ring-shaped friction lining mount (7) is connected axially shiftable or non-rotatable radially internally to the hub of said traction sheave (1) and protrudes radially from within into the radial gap between said machine element (5) and said armature disk (6),
wherein the annular solenoid mount (2) including the solenoid (12) is accomodated in the annular interior space of the traction sheave (1), i. e. together with the axially shiftable armature disk (6) as influenced by the springs (11) or the solenoid (12).

## Revendications

1. Frein de sécurité à friction à desserrage électromagnétique qui est fixé à un élément de machine, comme un moteur, un engrenage, ou une console de montage (5),
- comportant au moins un porte-bobines (2) disposé de manière fixe en rotation et une ou plusieurs bobines magnétiques (12) disposées dedans,
- comportant un disque d'induit (6) en une ou plusieurs pièces, contraint par une pression de ressort, disposé de manière fixe en rotation et capable de translation axiale par rapport au porte-bobines et à l'élément de machine,
- comportant au moins un support (7) de garnitures de friction tournant en forme d'anneau circulaire axialement entre le disqued'induit (6) et l'élément de machine (5), et
- comportant un agencement de moyeu rotatif en forme de disque moteur (1) du genre pot, entourant de manière périphérique toutes ces pièces de frein,
**caractérisé en ce que**
le au moins un porte-bobines (7) tournant en forme d'anneau circulaire est relié au bord frontal du disque moteur (1) tourné vers l'élément de machine et pénètre radialement de l'extérieur dans l'interstice radial entre l'élément de machine (5) et le disque d'induit (6),
le logement du porte-bobines (2) de forme annulaire comportant la bobine magnétique (12) supportée dedans se faisant dans l'espace intérieur de forme annulaire du disque moteur (1) du genre pot, et ce conjointement avec le disque d'induit (6) capable de translation axiale sous l'influence des ressorts (11) ou de la bobine magnétique (12).

2. Frein selon la revendication 1, **caractérisé en ce que** le support (7) de garnitures de friction en forme d'anneau circulaire est fixé avec possibilité de translation axiale au disque moteur (1) à l'aide de lamelles élastiques (9) en forme de segments d'anneaux circulaires.

3. Frein selon la revendication 2, **caractérisé en ce que** les lamelles (9) en forme de segments d'anneaux circulaires sont reliées en leur centre au disque moteur (1) et aux extrémités au support (7) de garnitures de friction - ou inversement -.

4. Frein selon l'une des revendications précédentes, **caractérisé en ce qu'**au moins un support de garnitures de friction supplémentaire est disposé parallèlement à celui-ci et coaxialement au premier support de garnitures de friction, et relié de manière fixe en rotation au disque moteur (1), et qu'un disque intermédiaire (14) est disposé entre respectivement deux supports (7) de garnitures de friction ou leurs garnitures de friction (8), et relié de manière fixe en rotation mais avec possibilité de translation axiale au disque d'induit (6) (goupilles d'entraînement 16).

5. Frein selon l'une des revendications 1 à 3, **caractérisé en ce que** la vis (10) fixant chaque lamelle (9) au support (7) de garnitures de friction pénètre axialement par sa tête dans un évidement approprié dans la face frontale en vis-à-vis du disque moteur (1).

6. Frein selon l'une des revendications précédentes, **caractérisé en ce que** la vis (13) fixant chaque lamelle (9) au disque moteur (1) pénètre axialement par sa tête dans un évidement approprié dans la périphérie extérieure du support (7) de garnitures de friction voisin axialement.

7. Frein selon l'une des revendications précédentes, **caractérisé en ce que** le disque d'induit (6) et/ou la bobine magnétique (12) sont divisés dans la direction radiale ou diagonale (figures 4 et 5).

8. Frein de sécurité à friction à desserrage électromagnétique qui est fixé à un élément de machine, comme un moteur, un engrenage, ou une console de montage (5),
- comportant au moins un porte-bobines (2) disposé de manière fixe en rotation et une ou plusieurs bobines magnétiques (12) disposées dedans,
- comportant un disque d'induit (6) en une ou plusieurs pièces, contraint par une pression de ressort, disposée de manière fixe en rotation et capable de translation axiale par rapport au porte-bobines et à l'élément de machine,
- comportant au moins un support (7) de garnitures de friction tournant en forme d'anneau circulaire axialement entre le disque d'induit (6) et l'élément de machine (5), et
- un agencement de moyeu rotatif en forme de disque moteur (1) du genre pot, entourant de manière périphérique toutes ces pièces de frein,
**caractérisé en ce que**
le au moins un porte-bobines (7) tournant en forme d'anneau circulaire est relié, radialement à l'intérieur, avec possibilité de translation axiale ou fixe en rotation, au moyeu du disque moteur (1) et pénètre radialement de l'intérieur dans l'interstice radial entre l'élément de machine (5) et le disque d'induit (6),
le logement du porte-bobines (2) de forme annulaire comportant la bobine magnétique (12) supportée dedans se faisant dans l'espace intérieur de forme annulaire du disque moteur (1) du genre pot, et ce conjointement avec le disque d'induit (6) capable de translation axiale sous l'influence des ressorts (11) ou de la bobine magnétique (12).
